# EUROPEAN PATENT APPLICATION

(11) **EP 2 933 231 A1**
(43) Date of publication of application: **21.10.2015**
(21) Application number: 13862826.8
(22) Date of filing: 14.11.2013
(51) Int. Cl.: C01G 25/00, B01D 53/86, B01J 20/06

(54) **COMPOSITE OXIDE MATERIAL AND EXHAUST GAS PURIFICATION CATALYST USING SAME**

(30) Priority: 12.12.2012 JP 2012271387
(71) Applicant: TOYOTA JIDOSHA KABUSHIKI KAISHA, Toyota-shi, Aichi-ken, 471-8571 (JP)
(72) Inventor: MIURA, Masahide, Toyota-shi Aichi 471-8571 (JP); MORIKAWA, Akira, Nagakute-shi Aichi 480-1192 (JP); TANABE, Toshitaka, Nagakute-shi Aichi 480-1192 (JP)
(74) Representative: Kuhnen & Wacker
(86) International application number: PCT/JP2013/080770
(87) International publication number: WO 2014/091862

(57) **Abstract**

The object of the present invention is to provide an oxygen storage material used for an exhaust gas purifying catalyst that is superior in stability at high temperatures. The composite oxide material of the invention comprises crystalline particles of a ceria-zirconia composite oxide with a pyrochlore structure and crystals of a ceria-zirconia composite oxide with a fluorite structure on the particle surface, in which the crystals of the ceria-zirconia composite oxide with a fluorite structure contains zirconia in a larger amount than that of ceria, and such crystals are integrated with the crystalline particles of the ceria-zirconia composite oxide with a pyrochlore structure. The composite oxide material of the invention has high oxygen storage capacity that is less likely to decrease at high temperatures.

## Description

### Technical Field

The present invention relates to a composite oxide material having oxygen storage capacity and an exhaust gas purifying catalyst using the same.

### Background Art

Exhaust gas emitted from an internal-combustion engine of a vehicle or the like contains harmful gases such as carbon monoxide (CO), nitrogen oxide (NOx), and unburned hydrocarbon (HC). As an exhaust gas purifying catalyst (so-called three-way catalyst) for decomposing such harmful gases, a ceria-zirconia composite oxide and the like having oxygen storage capacity (OSC) are used as a support catalyst. A substance having oxygen storage capacity (an oxygen storage material) can control an air-fuel ratio (A/F) in a microscopic space by absorbing and releasing oxygen and can suppress a decrease in purification rate due to variations in exhaust gas composition. It is preferable for an oxygen storage material not to decrease even if it is exposed to high-temperature exhaust gas.

Patent Literature 1 describes that a ceria-zirconia composite oxide with significantly improved heat resistance, which can exert a considerably high-level oxygen storage capacity even after it has been exposed to high temperatures for a long period of time, can be obtained by adjusting the content ratio of cerium to zirconium in a ceria-zirconia solid solution powder within the range of 43:57 to 48:52 by mole and subjecting the ceria-zirconia solid solution powder to compression molding at a predetermined pressure followed by reduction treatment under predetermined temperature conditions.

### Citation List

### Patent Literature

Patent Literature 1: JP Patent Publication (Kokai) No. 2011-219329

### Summary of the Invention

### Technical Problem

Patent Literature 1 describes that the ceria-zirconia composite oxide described therein is suitable for an exhaust gas purifying catalyst that is used at relatively high temperatures, such as 300°C or higher. When the ceria-zirconia composite oxide with a pyrochlore structure as described in Patent Literature 1 is exposed to excessively high-temperature conditions; however, oxygen storage capacity thereof would decrease due to destabilization of crystal structure caused by surface rearrangement. Accordingly, an oxygen storage material superior in a stability under high temperatures has been desired.

### Solution to Problem

The present inventors focused on the fact that a ceria-zirconia composite oxide with a pyrochlore structure is likely to undergo rearrangement to form a fluorite structure at high temperatures and that a ceria-zirconia composite oxide with a fluorite structure in which zirconia content is larger than ceria content (zirconia rich) is faster in oxygen absorption/discharge speed. They conceived of improving the stability of the ceria-zirconia composite oxide with a pyrochlore structure by modifying or covering surfaces of crystal particles of the ceria-zirconia composite oxide with a pyrochlore structure with a crystal of a zirconia-rich ceria-zirconia composite oxide with a fluorite structure. The present invention is summarized as follows.

(1) A composite oxide material comprising
   crystalline particles of a ceria-zirconia composite oxide with a pyrochlore structure and
   crystals of a ceria-zirconia composite oxide with a fluorite structure existing on a surface of said particle, wherein
   the crystals of a ceria-zirconia composite oxide with a fluorite structure contain zirconia in a larger amount than that of ceria and the crystals are integrated with said crystalline particles of the ceria-zirconia composite oxide with a pyrochlore structure.
(2) The composite oxide material according to (1), wherein the composite oxide material is obtained by doping zirconium in an amount of 1% to 20% by weight, wherein the amount is calculated in terms of zirconia in relation to the crystal particles, to the crystalline particles of a ceria-zirconia composite oxide with a pyrochlore structure and thereby forming the crystals with a fluorite structure.
(3) An oxygen storage material used for an exhaust gas purifying catalyst comprising the composite oxide material according to (1) or (2).
(4) An exhaust gas purifying catalyst comprising the composite oxide material according to (1) or (2).

### Advantageous Effects of the Invention

The composite oxide material according to the present invention has high oxygen storage capacity that is less likely to decrease at high temperatures. The composite oxide material according to the present invention is particularly useful as an oxygen storage material used for an exhaust gas purifying catalyst.

This description includes part or all of the content as disclosed in the description and/or drawings of Japanese Patent Application No. 2012-271387, which is a priority document of the present application.

### Brief Description of the Drawings

Fig. 1 shows the results of STEM-EDX line analyses of the samples obtained in comparative example and example.
Fig. 2 shows the results of IFFT analysis of the samples obtained in the example.
Fig. 3 shows the test results concerning the pyrochlore CZ of the comparative example and the surface-zirconium-modified pyrochlore CZ of the example.

### Description of Embodiments

The composite oxide material according to the present invention comprises crystalline particles (*i.e.* primary particles or secondary particles) of a ceria-zirconia composite oxide with a pyrochlore structure (Ce₂Zr₂O₇: hereafter referred to as a "pyrochlore-type ceria-zirconia composite oxide" or "pyrochlore CZ") and crystals of a ceria-zirconia composite oxide (zirconia-rich) with a fluorite structure that are existing such that they modify or cover at least a part of the surface ((Zr₁₋ₓ, Ceₓ)O₂, wherein x < 0.5; hereafter referred to as a "zirconia-rich fluorite-type ceria-zirconia composite oxide" or "zirconia-rich fluorite-type CZ").

In a ceria-zirconia composite oxide, "with a pyrochlore structure" means that a crystalline phase having a pyrochlore-type orderly arranged structure (*i.e*. the pyrochlore phase) is constituted by cerium ions and zirconium ions. Pyrochlore CZ has an oxygen-deficient site and, upon introduction of an oxygen atom thereinto, the pyrochlore phase shifts into the κ phase (Ce₂Zr₂O₈). On the other hand, the κ phase can shift into the pyrochlore phase when the oxygen atom is released. The oxygen storage capacity of a ceria-zirconia composite oxide with a pyrochlore structure is realized by the oxygen adsorption/discharge during reciprocal phase shift between the pyrochlore phase and the κ phase.

When pyrochlore CZ is used as an oxygen storage material for an exhaust gas catalyst, the material turns into pyrochlore phase under fuel-rich conditions and it turns into κ phase under fuel-lean conditions. The κ phase of the ceria-zirconia composite oxide is known to shift into the crystalline phase having a fluorite structure (CeZrO₄: a fluorite-type phase) as a result of rearrangement. Accordingly, under fuel-lean conditions, in particular fuel-lean conditions at high temperatures, the pyrochlore CZ is likely to turn into the fluorite-type phase, that is inferior in oxygen storage capacity than pyrochlore CZ, via κ phase. Such phase shift is considered to occur from a surface of pyrochlore CZ particle (surface rearrangement). As a result of the surface rearrangement of the pyrochlore CZ particles, oxygen storage capacity of pyrochlore CZ decreases, disadvantageously.

However, it has been known that the oxygen absorption/discharge speed of a ceria-zirconia composite oxide with a fluorite structure varies in accordance with a change in composition and that the speed of oxygen absorption/discharge becomes faster when zirconia content is larger than ceria content. While ceria (CeO₂) absorbs/discharges oxygen by varying the Ce valence when the gas atmosphere is changed, the volume expansion takes place when the valence is changed from +4 to +3. Accordingly, ceria is less likely to discharge oxygen. However, oxygen can become easily discharged with the addition of Zr having a smaller ion radius. Accordingly, by doping zirconium into a fluorite-type phase resulting from phase shift from pyrochlore phase, zirconia-rich fluorite-type CZ can be formed and the decrease in oxygen storage capacity can be suppressed.

The composite oxide material according to the present invention having the structure described above can be obtained by applying a heat to the pyrochlore CZ particles produced by a conventional technique so as to cause surface rearrangement and doping zirconia into the fluorite-type phase formed on the surface thereof. Specific methods for preparation include, for example, a method in which an aqueous solution comprising pyrochlore CZ particles and zirconium salts (e.g., zirconium oxynitrate) is evaporated to dryness, and a method in which an aqueous solution of zirconium salts is added to a suspension of pyrochlore CZ particles and the resultant is neutralized with an aqueous ammonia solution and the resulting powder is then calcined under atmospheric conditions. In such method, it could be considered that surface rearrangement of pyrochlore CZ particles and doping of zirconia thereto are simultaneously occur during the process of calcination. According to such methods, pyrochlore CZ particles are integrated (i.e. fused and stabilized) with zirconia-rich fluorite-type CZ formed on the surface thereof, and there is no clear boundary between pyrochlore CZ particles and zirconia-rich fluorite-type CZ and they are not easily separated from each other. It is preferable that zirconium be doped with pyrochlore CZ particles in an amount of 1% to 20% by weight on zirconia basis (calculated in terms of zirconia). In zirconia-rich fluorite-type CZ thus formed on the surface of pyrochlore CZ particles, it is preferable that the ratio of cerium content to zirconium content is within the range from 53.5:46.5 to 45:55 by weight.

In the composite oxide material according to the present invention, the pyrochlore CZ particle surface is modified or covered with zirconia-rich fluorite-type CZ and thereby the decrease in oxygen storage capacity resulting from surface rearrangement of the pyrochlore CZ particles is suppressed. In addition, since zirconia-rich fluorite-type CZ has relatively high oxygen storage capacity, the composite oxide material according to the present invention, in which the zirconia-rich fluorite-type CZ is used for modification or covering, maintains high oxygen storage capacity and has higher oxygen storage capacity than that of pyrochlore CZ particles, which do not have the modification or covering and therefore the surface thereof is likely to change into a fluorite structure. Therefore, the composite oxide material according to the present invention has high oxygen storage capacity that is less likely to decrease at high temperatures. The composite oxide material according to the present invention is particularly useful as an oxygen storage material used for an exhaust gas purifying catalyst.

### Examples

Hereinafter, the present invention is described in greater detail with reference to the examples, although the present invention is not limited to these examples.

### 1. Sample preparation

### (Comparative Example)

Cerium nitrate hexahydrate (121.8 g), zirconium oxynitrate dihydrate (88.0 g), and an 18% hydrogen peroxide solution (34.6 g) were dissolved in 500 ml of ion exchange water. Using the resulting solution and an aqueous 25% ammonia solution (300 g), a hydroxide precipitate was obtained through inverse coprecipitation. The resulting precipitate was separated by filtration, dehydrated via heating in a drying furnace at 150°C for 7 hours, and then calcined in an electric furnace at 400°C for 5 hours. The resulting powder was crushed and ground in a ball mill to obtain a ceria-zirconia solid solution powder with an average particle diameter of 1 µm (1 µm-CZ powder).

Using a compressor (a wet CIP apparatus), 1 µm-CZ powder was molded at a pressure of 3,000 kgf/cm², and the resultant was subjected to heat reduction in a graphite crucible filled with activated carbon under Ar atmosphere at 1,700°C for 5 hours. The resultant was oxidized through calcination in an electric furnace under atmospheric conditions at 500°C for 5 hours, and a pyrochlore-type ceria-zirconia composite oxide (pyrochlore CZ) was obtained. Pyrochlore CZ was crushed and ground in a ball mill to adjust the average secondary particle diameter to 11 µm.

### (Example)

11 µm-pyrochlore CZ powder was prepared in the same manner as in Comparative Example. 11 µm-pyrochlore CZ powder (10.0 g) and zirconium oxynitrate dihydrate (2.25 g) were dissolved in 50 ml of ion exchange water, and the resultant was evaporated to dryness with agitation. Subsequently, the resultant was dehydrated via heating in a drying furnace at 150°C for 7 hours and then calcined in an electric furnace at 500°C for 2 hours. The resulting powder was further calcined in an electric furnace under atmospheric conditions at 900°C for 3 hours. Thus, the pyrochlore CZ modified with zirconia-rich fluorite-type CZ according to the present invention was obtained.

### 2. TEM-EDX analysis

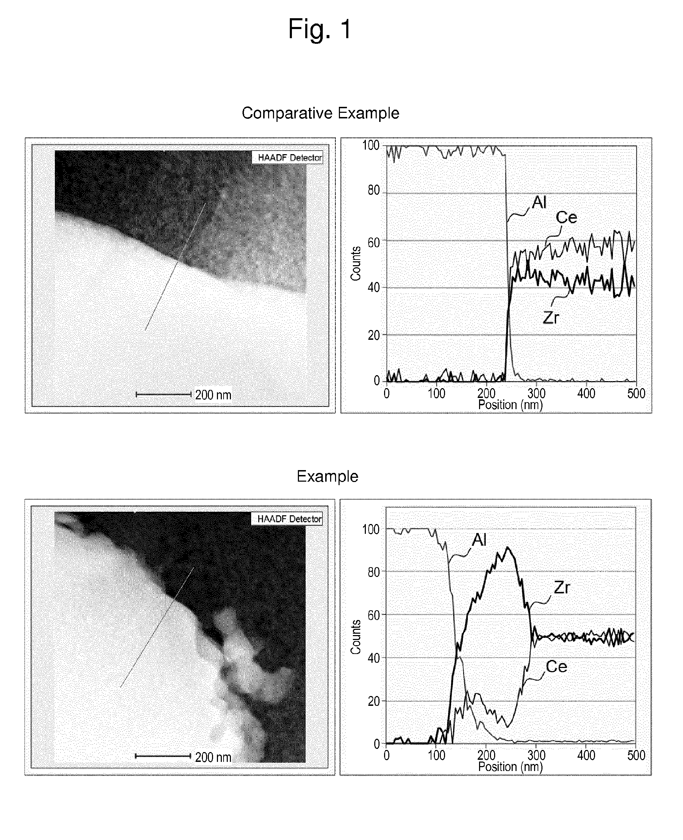

The samples obtained in the comparative example and the example were subjected to TEM-EDX analysis. Fig. 1 shows the results of STEM-EDX line analyses. In Fig. 1, an image shown on the left is a TEM image and a chart shown on the right shows the spectrum obtained by elemental analysis performed along the line indicated in the TEM image. In pyrochlore CZ of the comparative example, no change is observed in the Ce/Zr composition in an area close to the surface. In the pyrochlore CZ modified with zirconia-rich fluorite-type CZ of the example according to the present invention, however, Zr concentration is higher than Ce concentration in an area close to the surface and it can be understood that the structure is clearly different from that of the pyrochlore CZ of comparative example.

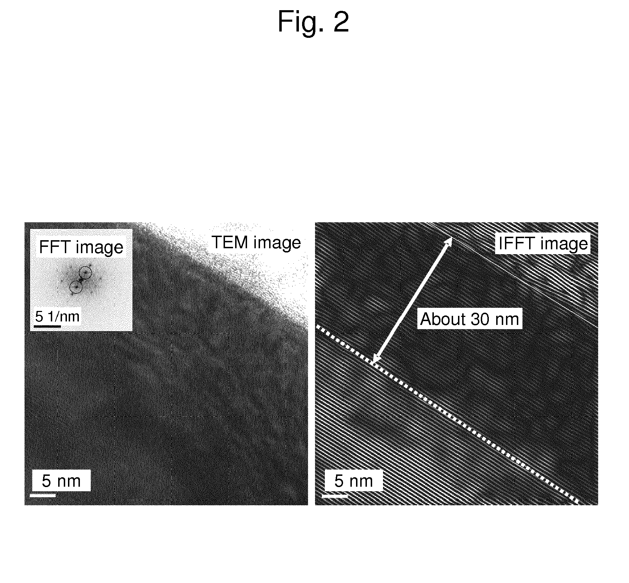

Fig. 2 shows the results of IFFT analysis of the samples obtained in the example. Fig. 2 shows a TEM image and an inverse Fourier transformation image (i.e., an IFFT image) of a spot characteristic of a pyrochlore structure observed in an FFT figure. As observed in the IFFT image, in the sample obtained in the example, a long-period structure is destroyed in a region with a width of about 30 nm close to the surface (shown in Fig. 2), and is converted into a fluorite structure.

### 3. High-temperature durability test

The samples obtained in the comparative example and in the example were subjected to the high-temperature durability test. In order to equalize the thermal hysteresis conditions of the samples, the sample of the comparative example was calcined in an electric furnace under atmospheric conditions at 900°C for 3 hours prior to the test. The high-temperature durability test was carried out by heating the samples in an electric furnace under atmospheric conditions at 1,100°C for 5 hours and measuring oxygen storage capacity (OSC) after the heating treatment.

The sample in the initial state or the sample subjected to the durability test was physically mixed with 0.25 wt% Pd/Al₂O₃ powder at a ratio of 1:1 by weight. The resulting powder was molded using a compressor (a wet CIP apparatus) at a pressure of 1,000 kgf/cm² and crushed and sieved to prepare 1-mm-square pellets. The pellets (3.0 g) were mounted on a fixed-bed flow apparatus, and an evaluation gas with the total flow rate of 15 liters was used. The temperature of the evaluation gas was 400°C, 500°C, or 600°C. On the basis of the amount of CO₂ generated when 1%-O₂ (N₂ balance) flowed, the amount of O₂ emitted from the sample was determined by the reaction formula: CO + 1 / 2 O₂ → CO₂. Since the amount of oxygen emitted from cerium is represented by the reaction formula: 2CeO₂ → Ce₂O₃ + 1 / 2 O₂, the utilization ratio of CeO₂ was determined on the basis of the theoretical threshold of lattice oxygen in the material determined on the basis of the amount of Ce incorporated and the amount of O₂ emitted.

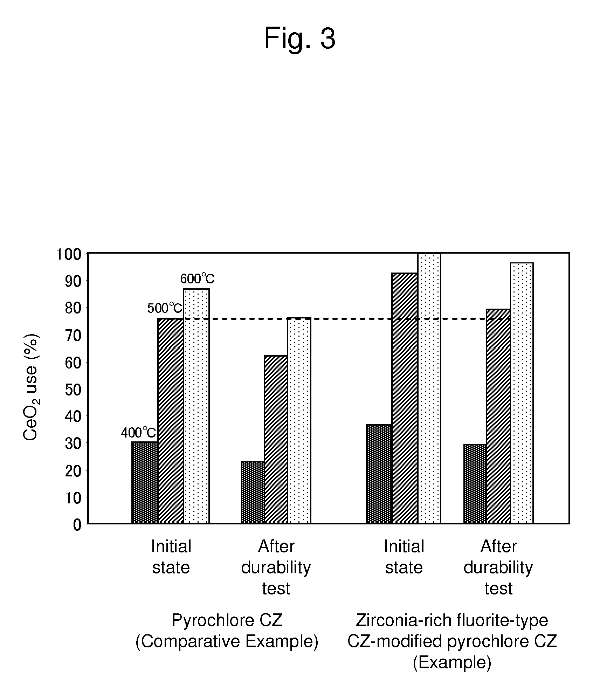

Fig. 3 shows the test results concerning the pyrochlore CZ of the comparative example and the surface-zirconium-modified pyrochlore CZ of the example. As is apparent from the evaluation results at 500°C, for example, the utilization ratio of CeO₂ of the pyrochlore CZ of the comparative example was reduced after the durability test; however, the utilization ratio of CeO₂ of the surface-zirconium-modified pyrochlore CZ of the example remained at a level equal to or higher than the initial performance of the pyrochlore CZ of the comparative example after the durability test.

All publications, patents, and patent applications cited herein are incorporated herein by reference in their entirety.

## Claims

1. A composite oxide material comprising
crystalline particles of a ceria-zirconia composite oxide with a pyrochlore structure and
crystals of a ceria-zirconia composite oxide with a fluorite structure existing on a surface of said particle, wherein
the crystals of a ceria-zirconia composite oxide with a fluorite structure contain zirconia in a larger amount than that of ceria and the crystals are integrated with said crystalline particles of the ceria-zirconia composite oxide with a pyrochlore structure.

2. The composite oxide material according to claim 1, wherein the composite oxide material is obtained by doping zirconium in an amount of 1% to 20% by weight, wherein the amount is calculated in terms of zirconia in relation to the crystal particles, to the crystalline particles of a ceria-zirconia composite oxide with a pyrochlore structure and thereby forming the crystals with a fluorite structure.

3. An oxygen storage material used for an exhaust gas purifying catalyst comprising the composite oxide material according to claim 1 or 2.

4. An exhaust gas purifying catalyst comprising the composite oxide material according to claim 1 or 2.
